# EUROPEAN PATENT SPECIFICATION

(11) **EP 2 595 433 B1**
(45) Date of publication and mention of the grant of the patent: **02.06.2021**
(21) Application number: 11189906.8
(22) Date of filing: 21.11.2011
(51) Int. Cl.: H04W 48/02, H04W 48/16, H04W 84/12

(54) **Method and system for network-centric discovering of points of attachement to the network for mobile devices within networks having plural access points**
Verfahren und System für netzwerkzentrierte Entdeckung von Anschlusspunkten an das Netzwerk für mobile Vorrichtungen in Netzwerken mit mehreren Zugangspunkten
Procédé et système pour la découverte centrée sur un réseau des points de fixation au réseau pour les dispositifs mobiles dans les réseaux ayant plusieurs points d'accès

(43) Date of publication of application: 22.05.2013
(73) Proprietor: Deutsche Telekom AG, 53113 Bonn (DE)
(72) Inventor: Bayer, Nico, 61231 Bad Nauheim (DE); Roos, Andreas, 64354 Reinheim (DE); Sivchenko, Dimitry, 64285 Darmstadt (DE)
(74) Representative: Vossius & Partner Patentanwälte Rechtsanwälte mbB

(56) References cited:
- EP-A1- 2 278 834
- US-A1- 2008 320 108
- US-B1- 7 480 264

## Description

### Technical Field

The present invention relates to a method for of discovering surrounding access points of a legacy mobile device within a network which can be used to connect a mobile node to communicate for example to the Internet.

### Background Art

For connecting mobile computing devices, such as laptops, tablets, smartphones, personal digital assistants and the like, Wireless Local Area Networks (WLAN) are widespread today. in this context, the Local and Metropolitan Area Network (LAN/MAN) Standards Committee (IEEE 802) of the Institute of Electrical and Electronics Engineers (IEEE) deployed a set of standards for implementing WLAN (IEEE 802.11) providing communication usually in 2.4 and 5 GHz frequency bands.

Since the deployment of IEEE 802.11b [1] standard users changed their behaviour to get access to networks and particularly to the Internet. Whereas before the rapid growth of WLAN, users usually connected to the Internet by means of cable connections, nowadays, users often connect to the Internet via WLAN. Due to some standards of IEEE 802.11, e.g. IEEE 802.11g and IEEE 802.11n, problems with bandwidth performance within WLAN have been significantly reduced. Moreover, nearly every mobile device is equipped with wireless network interfaces such that the demand of consuming services on mobile devices has extensively increased also while users are on the move.

However, the limited range of WLAN access points can lead to frequent handovers in the case that the user is moving. On the one hand side handover processes can lead to connection interruptions and on the other hand side it is in general not possible to control to which access point the mobile device establishes upcoming connections using the basic IEEE 802.11 standard.

With regard to additional network features, such as load balancing or energy-saving it is necessary to have the possibility for network-centric decisions and control to which access point a mobile node ideally is connected.

For meeting these needs there are currently neighbour access point discovery mechanisms available that require specific software to be installed on the mobile device. A prominent example is the IEEE 802.21 standard [2] which provides an "Information Service" as central control entity to obtain useful network data, e.g. "list of neighboring networks". Thereby, for network controlled handovers, the central control entity located in the network needs to have information about possible target access points to which a mobile device could be handed off.

However, legacy IEEE 802.11 mobile devices do generally not have mechanisms providing information about surrounding access points to the network. Furthermore, the need for installing additional software on the mobile devices significantly reduces applicability and spread of according solutions. Moreover, the additional software to be installed on the mobile device has to be adapted to a plurality of computer platforms which causes a comparably high effort in view of development as well as maintenance and support of the additional software. Still further, the installation of additional software can be relevant in view of safety such that it is often undesired and/or inadmissible by the user or a network administrator.

Therefore, there is a need for a system allowing gathering information about surrounding access points to the network to which a mobile device is able to connect that can be conveniently implemented using legacy technologies on mobile devices.

US 2008/0320108 A1 relates to techniques for enhancing the throughput capacity available to client devices, such as mobile computing devices connected to a wireless local area network (WLAN) using central management techniques.

EP 2 278 834 A1 relates to a method for transferring data between a client and a server in a telecommunication network, as well as a system, a server, a client and a node as well as to the implementation of methods for authentication of a client trying to connect to a server via a telecommunication network

### Disclosure of the Invention

According to the invention this need is settled by a method as it is defined by the features of independent claim 1, by a computer program as it is defined by the features of independent claim 9 and by a control entity as it is defined by the features of independent claim 11. Preferred embodiments are subject of the dependent claims.

In particular, the gist of the invention is the following: A method of discovering surrounding access points of a legacy mobile device within an IEEE 802.11 network is provided wherein the mobile device has a wireless network interface, the network comprises a plurality of wireless access points and a blacklist is implemented for each of the plurality of access points. The method comprises: providing a control entity being connected to each of the plurality of access points; recording an identifier of the mobile device in the blacklist of each of the plurality of access points; the mobile device transmitting a request for access to each of the of the plurality of access points wherein the request comprises the identifier of the mobile device; each of the plurality of the access points rejecting the request of the mobile device and transmitting information about the rejection to the control entity wherein the rejection information comprises the identifier of the mobile device; and the control entity adapting the blacklist of each of the plurality of access points using the rejection information.

The term "access point" in the context of the invention particularly relates to a component or device that allows wireless devices to connect to a network usually using a standard such as, e.g. Wi-Fi or the like. In legacy access points often security mechanisms are implemented such as data encryption, e.g. Wi-Fi Protected Access (WPA), WPA-Pre-Shared Key (WPA-PSK), Wi-Fi Protected Access II (WPA2) or Wired Equivalent Privacy (WEP), authentication, e.g. IEEE 802.1x/RADIUS, access control, e.g. by means of blacklists, or the like. In this context, the term "legacy" relates to methods, technologies, systems or computer programs that are known and in particular that are not specifically adapted to implement the invention. The term "blacklist" in the context of the invention relates to a data collection such as a list used within an access control mechanism that allows access except for members of the blacklist or the list of denied accesses. Typically, access points have an individual blacklist, e.g. stored in a memory of the access point, which is valid for the respective access point only. However, the method according to the invention is also suitable for other implementations of blacklists such as centralized blacklists or the like. The blacklists of each of the access points can be generated and updated in various different ways. For example, they can be initially generated by a network administrator or by the control entity such as, e.g. described below.

The request for access transmitted by the mobile device can particularly be an Association-Request-Frame and the information about the rejection sent by the access point to the mobile device can particularly be a Disassociation-Frame. The control entity can particularly be an accordingly arranged computer such as a server computer, a workstation computer, a desktop computer, a laptop computer or the like. It can be connected to the access points via any suitable network connection such as a Local Area Network (LAN) connection, e.g. Ethernet, Wide Area Network (WAN) connection, combinations thereof or similar. The wireless network interface of the mobile device can particularly comprise a hardware component which is wirelessly connectable to networks such as a wireless network interface controller, wireless network interface card, wireless network adapter or WLAN adapter.

With the method according to the invention the network gets information about access points being reachable by the mobile terminal e.g. in order to identify a possible target access point for handover.

By using the blacklist technology commonly implemented in many legacy access points, the method according to the invention allows for an efficient discovering of surrounding access points of legacy mobile terminals and in some embodiments also of legacy access points. This means that no specific adaptation of mobile devices and/or access points is necessary.

Preferably, recording of the identifier of the mobile device in each blacklist of the plurality of access points comprises establishing a connection between the mobile device and an initial access point of the access points via the wireless network interface of the mobile device; the initial access point transmitting an identifier of the mobile device to the control entity; and the control entity transmitting the identifier of the mobile device to each of the plurality of access points and initiating recording of the identifier of the mobile device in each blacklist of the plurality of access points.

By means of such a recording procedure an efficient automatic learning process for neighbouring access points of a mobile device can be implemented. Thereby, any recording specific arrangement or adaptation of the mobile device can be avoided such that the method according to the invention can conveniently be implemented for any suitable legacy mobile device. For example, the transmission of the identifier of the mobile device from the access point to the control entity can be established by transmitting an assoc_inf (association information) message comprising the identifier of the mobile device to the control entity. Also such an automatic recording allows for an automatic creation of a neighbouring list comprising all access points reachable by the mobile device. In addition thereto neighbour access point lists can also be used to determine a location of the mobile device using known triangulation mechanisms.

Preferably, the mobile device transmits a request for access comprising the identifier of the mobile device to each access point of the plurality of access points which is reachable by the wireless network interface of the mobile device; each reachable access point rejecting the request of the mobile device and transmitting information about the rejection comprising the identifier of the mobile device to the control entity; and the control entity establishing a data collection about the reachable access points of the mobile device. The term "reachable" in this context relates to access points to which the mobile device is capable of establishing a sufficient wireless connection. Reachability of the access points inter alia depends on the involved radio frequencies, shape and orientation of antennas, interfering objects and the like. The data collection can be a list of neighbouring access points, e.g. stored in a database of the control entity. Such data collection can provide basis for network based handover decisions or localisation within access management of the mobile device within the network. As mentioned above such neighbour access point lists can also be used to determine a location of the mobile device.

Preferably adapting the blacklist of each of the access points comprises removing the identifier of the mobile device from the blacklist of a selected access point of the plurality of access points wherein the selected access point is evaluated according to a predefined mechanism. The predefined mechanism which can be implemented in the control entity can take into account various aspects which are important for managing the access of mobile devices within the network such a performance, bandwidth, signal strength, utilization of the access points and the like. Thereby, adapting the blacklist of each of the access points preferably comprises recording the identifier of the mobile device in the blacklist of the selected access point and removing the identifier from the blacklist for a further selected access point of the plurality of access points wherein the further selected access point is evaluated according to the predefined mechanism.

Preferably, a database is provided in the control entity and the control entity at least partially stores the rejection information in the database. Such a database allows for conveniently establishing data collections such as a neighbouring list of the mobile device which can form a basis for the access management within the network as described above and below. When storing rejection information, the identifier such as the MAC address of the mobile device can be used as the key field for the database in the central entity storing information about access points to which the mobile device with this identifier has been associated or has tried to perform a connection or new association.

Preferably, the rejection information further comprises an identifier of the at least one access point, signal strength of the mobile device at the at least one access point, capability of the at least one access point, available resources at the at least one access point or any combination thereof. Depending on the aim of operation of the method, e.g. access management, such additional information within the rejection information can improve efficiency of the network access management.

Preferably, the wireless network interface of the mobile device and the access points are arranged to communicate based on IEEE 802.11. IEEE 802.11 in this context relates to a collection of standards for implementing WLAN computer communication usually in 2.4 and 5 GHz frequency bands which standards provide the basis for at least partial wireless networks such as Wi-Fi wireless networks. These standards are created and maintained by the Local and Metropolitan Area Network (LAN/MAN) Standards Committee (IEEE 802) of the Institute of Electrical and Electronics Engineers (IEEE). If the control entity is connected to the access points by means of a LAN connection, communication can be based on IEEE 802.3. IEEE 802.3 in this context relates to a collection of standards for wired network or Ethernet created and maintained by the same committee. In this way, legacy access points and mobile devices using standard communication technologies such as widespread IEEE 802 standards can conveniently be integrated within the method according to the invention.

Preferably, the identifier of the mobile device is the Media Access Control (MAC) address of the wireless network interface of the mobile device. MAC address in this context relates to a unique identifier assigned to network interfaces for communications on a physical network segment which are used for numerous network technologies and most IEEE 802 network technologies including Ethernet. MAC addresses can, e.g. be assigned by a manufacturer of a network interface card and be stored in its hardware such as the card's read-only memory.

A further aspect of the invention relates to a computer program having computer executable program code being arranged to implement the method described above when being executed. Such a computer program allows for an efficient and convenient implementation and deployment of the method according to the invention. In particular, the code means preferably are arranged to implement the control entity on a computer when being executed.

Another further aspect of the invention relates to a control entity having a processing unit such as a Central Processing Unit (CPU), a network interface such connectable to a plurality of blacklist comprising access points within a network, a memory unit and a database arranged in the memory unit. The control entity is arranged for managing wireless access of a mobile device having a wireless network interface within the network. It comprises a mobile device identifier recorder arranged to record an identifier of the mobile device in the blacklist of each of the plurality of access points; and a blacklist adapter arranged to adapt the blacklist of each of the access points using rejection information transmitted by at least one access point of the plurality of access points wherein the rejection information comprises the identifier of the mobile device. As mentioned above in the context of the invention the control entity can particularly be a computer such as a server computer, a workstation computer, a desktop computer or a laptop computer. Such a control entity allows for an efficient implementation of the method according to the invention providing the effects and advantages described above and below.

Within the control entity, the mobile device identifier recorder preferably is arranged to record the identifier of the mobile device in each blacklist of the plurality of access points by comprising a connection establisher arranged to establish a connection between the mobile device and an initial access point of the plurality of access points via the wireless network interface of the mobile device; and a mobile device identifier transmitter arranged for transmitting the identifier of the mobile device to each of the plurality of access points after the initial access point has transmitted the identifier of the mobile device and initiating recording of the identifier of the mobile device in each blacklist of the plurality of access points.

Preferably, the control entity comprises a reachable access point data collection establisher arranged to establish a data collection about reachable access points of the mobile device after information about a rejection comprising the identifier of the mobile device of each access point of the plurality of access points which is reachable by the wireless network interface of the mobile device is transmitted to the control entity.

The blacklist adapter preferably is arranged to adapt the blacklist of each of the access points by removing the identifier of the mobile device from the blacklist of a selected access point of the plurality of access points wherein the selected access point is evaluated according to a predefined mechanism. Thereby, the blacklist adapter preferably is arranged to adapt the blacklist of each of the access points by recording the identifier of the mobile device in the blacklist of the selected access point and removing the identifier from the blacklist for a further selected access point of the plurality of access points wherein the further selected access point is evaluated according to the predefined mechanism.

Preferably, the database of the control entity is arranged to at least partially store the rejection information.

Summarizing the above a new method and system to learn the surrounding access points of a mobile terminal is proposed preferably by utilising available IEEE 802.11 mechanisms which requires neither hardware nor software changes within involved mobile devices. Neighbour access point discovery can be enabled for huge number of legacy IEEE 802.11 mobile devices which can be the basis to perform network-centric connectivity management, e.g. handovers.

In particular, a new method and system for a network-centric discovery of neighbouring access points of legacy mobile devices in IEEE 802.11 based networks can be provided. Using the described method or system, the network can be able to identify possible target access points to which a mobile device can connect to. The method can exploit association/disassociation processes defined by the IEEE 802.11 standard mentioned above wherein no extensions of the software or hardware are required on the mobile device side. The identification of mobile devices as well as access points can conveniently be based on MAC addresses of the WLAN interfaces.

In IEEE 802.11 standards, every mobile device has to finish successfully the association procedure by exchanging Association-Request-Frame / Association-Response-Frame between the mobile device and the access point. If an access point does not want to accept the association of a station, it has the possibility to answer to the Association-Request-Frame with a disassociation-frame. Disassociation-frames can also be used by an access point to inform an already associated mobile device about the deletion from association list of the access point. An established WLAN link between the mobile device and access point is then broken.

In case the mobile device receives a Disassociation-Frame, the mobile device usually will search for alternative access points of the same network in its neighbourhood. If another access point is found, the mobile device will again try to connect to the found access point by sending an Association-Request-Frame.

According to the invention this behaviour can be exploited to implement a network-centric neighbour access point discovery in which a list of neighbouring access points of a mobile device is maintained by a central control entity. These neighbour access point lists can serve as the basis for network based handover decisions or localisation.

If an identifier of the wireless network interface of the mobile device is listed in the blacklist of an access point an association-request of this mobile device can be rejected by answering with a Disassociation-Frame. If the identifier of the mobile device is added to the blacklist when the mobile device is already connected to the access point the association is deleted and the mobile device can be informed about this by sending Disassociation-Frame to the mobile device from the access point.

In case an access point of the plurality of access points has accepted an association-request, rejected an association-request or has deleted an active association of a mobile device, it can send this information to the central control entity. Main information submitted to the control entity is the identifier such as the MAC address of the mobile device. Optionally, further information can be transmitted, e.g. channel quality information, traffic demand of the mobile device, access point ID, etc. If a mobile device is added to the blacklist of all access points within a network, the control entity will receive information from all access points to which the mobile device wanted to associate to. Hence, the control entity learns about neighbouring access points of the mobile device.

These and other aspects of the invention will be apparent from and elucidated with reference to the embodiment(s) described hereinafter.

### Brief Description of the Drawings

The method and the control entity according to the invention are described in more detail herein below by way of an exemplary embodiment and with reference to the attached Fig. showing a diagram of an embodiment of a network-centric neighbour discovery architecture.

### Mode(s) for Carrying Out the Invention

In the Fig. an embodiment of a network-centric architecture for neighbour discovery is shown. Exemplary, the embodiment of the Fig. comprises a plurality of access points 2 wherein it is understood that the invention is not restricted with regard to the number of access points. The plurality of access points 2 has a first access point 21 with a first blacklist 211 stored in its memory, a second access point 22 with a second blacklist 221 stored in its memory and a third access point 23 with a third blacklist 231 stored in its memory. Thus, a blacklist 211, 221, 231 is implemented for each of the plurality of access points 2.

The embodiment shown in the Fig. further comprises a control entity 1 with a computer 11, a database 12 and a local database connection 13. The computer 11, the database 12 and the local database connection 13 can be arranged in many ways commonly known to the skilled person. For example, the computer 11 can be arranged as a workstation computer having the database 12 implemented on an internal hard disk which is connected via an internal bus as database connection 13. In particular, the computer 11 and the database 12 within the control entity 1 are arranged in order to perform the procedures and approaches described herein below, wherein for that purpose a computer program is executed on the computer 11.

The plurality of access points 2 and the computer 11 of the control entity 1 are interconnected using wires via a common network infrastructure 6. In particular, each of the computer 11 of the control entity 1, the first access point 21, the second access point 22 and the third access point 23 are connected to the common network infrastructure 6 via wired connections 71. The common network infrastructure 6 can be any infrastructure suitable to interconnect the control entity 1 and the access points 2. For example, in a comparably simple arrangement the common network infrastructure 6 can be a switch, a switching hub or a multilayer switch, e.g. as a multi-port network bridge processing and routing data.

Further, the embodiment shown in the Fig. comprises a mobile device 4 having a wireless network interface. The mobile device 4 can be any suitable mobile computing device such as a laptop, a tablet computer, a smartphone, a personal digital assistant or the like wherein the mobile device 4 of the Fig. is a laptop computer. In the situation shown in the Fig. the mobile device 4 is connected via its wireless network interface and wireless network connection 72 to the first access point 21. The wireless network connection 72 and the wired network connections 71 together form connections 7 of the network.

When the mobile device 4 establishes the wireless connection 72 with the first access point 21 an association-request / association-response procedure is completed. As a result of this, the first access point 21 informs the control entity 1 about a successful association of the mobile device 4. This is done by sending an assoc_inf message from the first access point 1 to the control entity 1. Information within the assoc_inf message comprises the Media Access Control address (MAC address) of the wireless network interface of the mobile device 4 as identifier of the mobile device 4 and an ID of the first access point 21 as an identifier of the first access point 21. As a result, the control entity 1 adds this information into a neighbour_table implemented in its local database 12.

For handover execution or similar things, it can be required or useful that the control entity 1 is aware of all access points 2 within the network seen or reachable by the mobile device 4. In that case the control entity 1 initiates a neighbour access point discovery by sending a BL_add (blacklist add) message to all access points 2 with the MAC address of the mobile device 4 telling the access points 2 to add this MAC address into their blacklists 211, 221, 231. As the mobile device is currently connected to the first access point 21 in the situation shown in the Fig., the first access point 21 will clear the association by sending a Disassociation-Frame to the mobile device 4. After that the mobile device usually will start to scan for other access points 2 within the same network, e.g. the network having the same Extended Service Set IDentification (ESSID). In the embodiment shown in the Fig. the mobile device 4 finds the second access point 22 and initiates the association procedure with the second access point 22. As the MAC address of mobile device 4 is in the blacklist 221 of the second access point 22 as well it will reject the association-request and will inform the control entity 1 about the rejected association by sending an assoc_inf message to the control entity 1. Information within the assoc_inf message comprises the MAC address of the mobile device 4 as identifier of the mobile device 4 and an ID of the second access point 22 as an identifier of the second access point 22. After the mobile device 4 has received the association reject message it will again start the scanning procedure to search for further access points 2 within the same network. In the embodiment shown in the Fig. the mobile device 4 will find the third access point 23 and will again initiate the association procedure. As the MAC address of the mobile device 4 is also on the blacklist 231 of the third access point 23, the third access point 23 will also reject the association and will inform the control entity 1 by sending an assoc_inf message to the control entity 1.

The discovery procedure can then be considered to be finished using different suitable approaches, such as, e.g. after a timeout.

When the discovery procedure is finished the control entity 1 has a list of all neighbouring access points 2 to which the mobile device 4 could potentially setup a connection. Based on this table for instance a connectivity manager within the control entity 1 can decide to handover the mobile device 4 to an other access point 2, e.g. in order to increase the network performance in terms of load balancing or to decrease energy consumption by switching off selected access points 2. In order to make the decision more precise the assoc_info messages comprises additional information such as, e.g. signal quality, amount of connected mobile devices, etc. Possible decisions to initiate handover process to one of found access points 2 and handover execution can be performed according to known respective procedures as predefined mechanisms. In addition to this, the list of neighbouring access points 2 created by the control entity 1 can also be used to estimate the location of the mobile device 4.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. For example, it is possible to operate the invention wherein:
- Plural mobile devices can parallely and/or sequently be operated with the system and method according to the invention.
- The number of access points within the system and method according to the invention can be any suitable number wherein it can be limited to about thirty.

Furthermore, in the claims the word "comprising" does not exclude other elements or steps, and the indefinite article "a" or "an" does not exclude a plurality. A single unit or step may fulfil the functions of several features recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g. a computer program can be a computer program product stored on a computer readable medium which computer program product can have computer executable program code adapted to be executed to implement a specific method, such as the method according to the invention. Any reference signs in the claims should not be construed as limiting the scope. The invention is defined by the claims.

### References

[1] IEEE Std 802.11™-1999 - Information technology- Telecommunications and information exchange between systems- Local and metropolitan area networks- Specific requirements- Part 11: Wireless LAN Medium Access Control (MAC) and Physical Layer (PHY) Specifications
[2] IEEE, "IEEE Standard for Local and Metropolitan Area Networks Part 21: Media Independent Handover," IEEE Standard 802.21.2008, December 2009

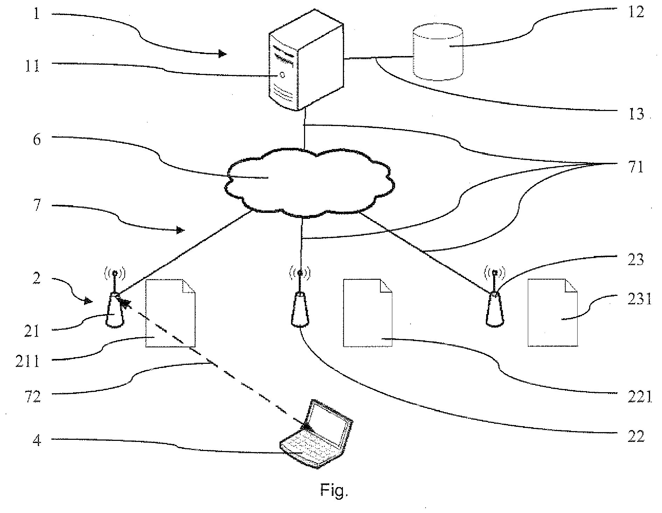

## Claims

1. Method of discovering surrounding access points of a legacy mobile device (4) within a network wherein the mobile device (4) has a wireless network interface, the network comprises a plurality of wireless access points (2) and a blacklist (211, 221, 231) is implemented for each of the plurality of access points (2), the method comprising:
providing a control entity (1) being connected to each of the plurality of access points (2);
establishing a connection between the mobile device (4) and an initial access point (21, 22, 23) of the access points (2) via the wireless network interface of the mobile device (4);
the initial access point (21, 22, 23) transmitting an identifier of the mobile device (4) to the control entity (1);
the control entity (1) transmitting a blacklist add message to each of the plurality of access points (2), wherein the blacklist add message comprises the identifier of the mobile device (4) and an indication to add the identifier of the mobile device (4) in the respective blacklist (211, 221, 231) of each of the plurality of access points (2);
the initial access point (21, 22, 23) sending a disassociation message to the mobile device (4) for clearing the association with the mobile device (4);
the mobile device (4) transmitting a request for access to another access point (21, 22, 23) of the plurality of access points (2) wherein the request comprises the identifier of the mobile device (4);
the another access point (21, 22, 23) rejecting the request of the mobile device (4) and transmitting information about the rejection to the control entity (1) wherein the rejection information comprises the identifier of the mobile device (4) and an identifier of the another access point (21, 22, 23);
the mobile device repeating the step of transmitting a request to another access point (21, 22, 23) until the mobile device (4) has send an access request to each of the plurality of access points (2) and/or after a timeout has expired,
wherein the wireless network interface of the mobile device (4) and the access points (2) are arranged to communicate based on IEEE 802.11.

2. The method according to claim 1, wherein
the mobile device (4) transmits a request for access comprising the identifier of the mobile device (4) to each access point (21, 22, 23) of the plurality of access points (2) which is reachable by the wireless network interface of the mobile device (4);
each reachable access point (21, 22, 23) rejecting the request of the mobile device (4) and transmitting information about the rejection comprising the identifier of the mobile device (4) to the control entity; and
the control entity (1) establishing a data collection about the reachable access points (2) of the mobile device (4).

3. The method according to any one of the preceding claims, wherein adapting the blacklist (211, 221, 231) of each of the access points (2) comprises removing the identifier of the mobile device (4) from the blacklist (211, 221, 231) of a selected access point (21, 22, 23) of the plurality of access points (2) wherein the selected access point (21, 22, 23) is evaluated according to a predefined mechanism.

4. The method according to claim 3, wherein adapting the blacklist (211, 221, 231) of each of the access points (2) comprises recording the identifier of the mobile device (4) in the blacklist (211, 221, 231) of the selected access point (21, 22, 23) and removing the identifier from the blacklist (211, 221, 231) for a further selected access point (21, 22, 23) of the plurality of access points (2) wherein the further selected access point (21, 22, 23) is evaluated according to the predefined mechanism.

5. The method according to any one of the preceding claims, wherein a database (12) is provided in the control entity (1) and the control entity (1) at least partially stores the rejection information in the database (12).

6. The method according to any one of the preceding claims, wherein the rejection information further comprises an identifier of the at least one access point, signal strength of the mobile device (4) at the at least one access point, capability of the at least one access point (21, 22, 23), available resources at the at least one access point (21, 22, 23) or any combination thereof.

7. The method according to any one of the preceding claims, wherein the identifier of the mobile device (4) is the media access control address of the wireless network interface of the mobile device (4).

8. A computer program having computer executable program code means, wherein the code means are arranged to implement the method steps as performed by the control entity (1) defined in claims 1 to 7 on a computer when being executed.

9. Control entity (1) having a processing unit, a network interface connectable to a plurality of access points (2) each having a respective blacklist within a network, a memory unit and a database (12) arranged in the memory unit, the control entity (1) being arranged for managing wireless access of a mobile device (4) having a wireless network interface within the network, wherein the control entity (1) comprises
a mobile device identifier recorder arranged to record an identifier of the mobile device (4) in the blacklist (211, 221, 231) of each of the plurality of access points (2); and
a blacklist adapter arranged to adapt the blacklist (211, 221, 231) of each of the access points (2) using rejection information transmitted by at least one access point (21, 22, 23) of the plurality of access points (2) wherein the rejection information comprises the identifier of the mobile device (4),
wherein the mobile device identifier recorder is arranged to record the identifier of the mobile device (4) in each blacklist (211, 221, 231) of the plurality of access points (2) by comprising
a connection establisher arranged to receive information about a successful connection between the mobile device (4) and an initial access point (21, 22, 23) of the plurality of access points (2) via the wireless network interface of the mobile device (4); and
a mobile device identifier transmitter arranged for transmitting the identifier of the mobile device (4) to each of the plurality of access points (2) after the initial access point (21, 22, 23) has transmitted the identifier of the mobile device (4) and initiating recording of the identifier of the mobile device (4) in each blacklist (211, 221, 231) of the plurality of access points (2),
wherein the wireless network interface of the mobile device (4) and the access points (2) are arranged to communicate based on IEEE 802.11.

10. The control entity (1) according to claim 9, comprising
a reachable access point data collection establisher arranged to establish a data collection about reachable access points (21, 22, 23) of the mobile device (4) after information about a rejection comprising the identifier of the mobile device (4) of each access point (21, 22, 23) of the plurality of access points (2) which is reachable by the wireless network interface of the mobile device (4) is transmitted to the control entity.

11. The control entity (1) according to any one of claims 9 or 10, wherein the blacklist adapter is arranged to adapt the blacklist (211, 221, 231) of each of the access points (2) by removing the identifier of the mobile device (4) from the blacklist (211, 221, 231) of a selected access point (21, 22, 23) of the plurality of access points (2) wherein the selected access point (21, 22, 23) is evaluated according to a predefined mechanism.

12. The control entity (1) according to claim 11, wherein the blacklist adapter is arranged to adapt the blacklist (211, 221, 231) of each of the access points (2) by recording the identifier of the mobile device (4) in the blacklist (211, 221, 231) of the selected access point (21, 22, 23) and removing the identifier from the blacklist (211, 221, 231) for a further selected access point (21, 22, 23) of the plurality of access points (2) wherein the further selected access point (21, 22, 23) is evaluated according to the predefined mechanism.

13. The control entity (1) according to any one of claims 9 to 12, wherein the database of the control entity (1) is arranged to at least partially store the rejection information.

## Patentansprüche

1. Verfahren zum Entdecken umgebender Zugangspunkte einer mobilen Altvorrichtung (4) innerhalb eines Netzwerks, wobei die mobile Vorrichtung (4) eine drahtlose Netzwerkschnittstelle aufweist, das Netzwerk mehrere drahtlose Zugangspunkte (2) aufweist und eine schwarze Liste (211, 221, 231) für jeden der mehreren Zugangspunkte (2) implementiert ist, wobei das Verfahren aufweist:
Bereitstellen einer Steuerentität (1), die mit jedem der mehreren Zugangspunkte (2) verbunden ist;
Herstellen einer Verbindung zwischen der mobilen Vorrichtung (4) und einem anfänglichen Zugangspunkt (21, 22, 23) der Zugangspunkte (2) über die drahtlose Netzwerkschnittstelle der mobilen Vorrichtung (4);
Übertragen durch den anfänglichen Zugangspunkt (21, 22, 23) einer Kennung der mobilen Vorrichtung (4) an die Steuerentität (1);
Übertragen durch die Steuerentität (1) einer Nachricht zur Hinzufügung zur schwarzen Liste an jeden der mehreren Zugangspunkte (2), wobei die Nachricht zur Hinzufügung zur schwarzen Liste die Kennung der mobilen Vorrichtung (4) und eine Anzeige aufweist, die Kennung der mobilen Vorrichtung (4) in die jeweilige schwarze Liste (211, 221, 231) von jedem der mehreren Zugangspunkte (2) hinzuzufügen;
Senden durch den anfänglichen Zugangspunkt (21, 22, 23) einer Trennungsnachricht an die mobile Vorrichtung (4) zum Löschen der Verbindung mit der mobilen Vorrichtung (4);
Übertragen durch die mobile Vorrichtung (4) einer Anforderung nach einem Zugriff auf einen anderen Zugangspunkt (21, 22, 23) der mehreren Zugangspunkte (2), wobei die Anforderung die Kennung der mobilen Vorrichtung (4) aufweist;
Zurückweisen durch den einen anderen Zugangspunkt (21, 22, 23) der Anforderung der mobilen Vorrichtung (4) und Übertragen von Informationen über die Zurückweisung an die Steuerentität (1), wobei die Zurückweisungsinformationen die Kennung der mobilen Vorrichtung (4) und eine Kennung des anderen Zugangspunkts (21, 22, 23) aufweisen;
Wiederholen durch die mobile Vorrichtung des Schritts der Übertragung einer Anforderung an einen anderen Zugangspunkt (21, 22, 23), bis die mobile Vorrichtung (4) eine Zugriffsanforderung an jeden der mehreren Zugangspunkte (2) gesendet hat und/oder nachdem eine Zeitüberschreitung abgelaufen ist,
wobei die drahtlose Netzwerkschnittstelle der mobilen Vorrichtung (4) und die Zugangspunkte (2) eingerichtet sind, beruhend auf IEEE 802.11 zu kommunizieren.

2. Verfahren nach Anspruch 1, wobei
die mobile Vorrichtung (4) eine Anforderung nach einem Zugriff, die die Kennung der mobilen Vorrichtung (4) aufweist, an jeden Zugangspunkt (21, 22, 23) der mehreren Zugangspunkte (2) überträgt, der durch die drahtlose Netzwerkschnittstelle der mobilen Vorrichtung (4) erreichbar ist;
jeder erreichbare Zugangspunkt (21, 22, 23) die Anforderung der mobilen Vorrichtung (4) zurückweist und Informationen über die Zurückweisung, die die Kennung der mobilen Vorrichtung (4) aufweisen, an die Steuerentität überträgt; und
die Steuerentität (1) eine Datensammlung über die erreichbaren Zugangspunkte (2) der mobilen Vorrichtung (4) herstellt.

3. Verfahren nach einem der vorhergehenden Ansprüche, wobei die Anpassung der schwarzen Liste (211, 221, 231) von jedem der Zugangspunkte (2) das Entfernen der Kennung der mobilen Vorrichtung (4) aus der schwarzen Liste (211, 221, 231) eines ausgewählten Zugangspunkts (21, 22, 23) der mehreren Zugangspunkte (2) aufweist, wobei der ausgewählte Zugangspunkt (21, 22, 23) gemäß einem vordefinierten Mechanismus bewertet wird.

4. Verfahren nach Anspruch 3, wobei die Anpassung der schwarzen Liste (211, 221, 231) von jedem der Zugangspunkte (2) das Aufzeichnen der Kennung der mobilen Vorrichtung (4) in der schwarzen Liste (211, 221, 231) des ausgewählten Zugangspunkts (21, 22, 23) und das Entfernen der Kennung aus der schwarze Liste (211, 221, 231) für einen weiteren ausgewählten Zugangspunkt (21, 22, 23) der mehreren Zugangspunkte (2) aufweist, wobei der weitere ausgewählte Zugangspunkt (21, 22, 23) gemäß dem vordefinierten Mechanismus bewertet wird.

5. Verfahren nach einem der vorhergehenden Ansprüche, wobei eine Datenbank (12) in der Steuerentität (1) vorgesehen ist und die Steuerentität (1) die Zurückweisungsinformationen mindestens teilweise in der Datenbank (12) speichert.

6. Verfahren nach einem der vorhergehenden Ansprüche, wobei die Zurückweisungsinformationen ferner eine Kennung des mindestens einen Zugangspunkts, die Signalstärke der mobilen Vorrichtung (4) an dem mindestens einen Zugangspunkt, die Fähigkeit des mindestens einen Zugangspunkts (21, 22, 23), die verfügbaren Ressourcen an dem mindestens einen Zugangspunkt (21, 22, 23) oder jede Kombination davon aufweisen.

7. Verfahren nach einem der vorhergehenden Ansprüche, wobei die Kennung der mobilen Vorrichtung (4) die Medienzugriffs-Steuerungsadresse der drahtlosen Netzwerkschnittstelle der mobilen Vorrichtung (4) ist.

8. Computerprogramm mit computerausführbaren Programmcodemitteln, wobei die Codemittel eingerichtet sind, die Verfahrensschritte, die durch die Steuerentität (1) nach den Ansprüchen 1 bis 7 ausgeführt werden, auf einem Computer zu implementieren, wenn sie ausgeführt werden.

9. Steuerentität (1) mit einer Verarbeitungseinheit, einer Netzwerkschnittstelle, die mit mehreren Zugangspunkte (2) verbindbar ist, die jeweils eine jeweilige schwarze Liste innerhalb eines Netzwerks aufweisen, einer Speichereinheit und einer Datenbank (12), die in der Speichereinheit angeordnet ist, wobei die Steuerentität (1) zum Verwalten eines drahtlosen Zugriffs einer mobilen Vorrichtung (4) mit einer drahtlosen Netzwerkschnittstelle innerhalb des Netzwerks eingerichtet ist, wobei die Steuerentität (1) aufweist eine Einheit zur Aufzeichnung einer Kennung der mobilen Vorrichtung, die eingerichtet ist, eine Kennung der mobilen Vorrichtung (4) in der schwarze Liste (211, 221, 231) von jedem der mehreren Zugangspunkte (2) aufzuzeichnen; und
eine Einheit zur Anpassung der schwarzen Liste, die eingerichtet ist, die schwarze Liste (211, 221, 231) von jedem der Zugangspunkte (2) unter Verwendung von Zurückweisungsinformationen anzupassen, die durch mindestens einen Zugangspunkt (21, 22, 23) der mehreren Zugangspunkte (2) übertragen werden, wobei die Zurückweisungsinformationen die Kennung der mobilen Vorrichtung (4) aufweisen,
wobei die Einheit zur Aufzeichnung der Kennung der mobilen Vorrichtung eingerichtet ist, die Kennung der mobilen Vorrichtung (4) in jeder schwarzen Liste (211, 221, 231) der mehreren Zugangspunkte (2) aufzuzeichnen, indem sie aufweist:
eine Verbindungsherstellungseinheit, die eingerichtet ist, Informationen über eine erfolgreiche Verbindung zwischen der mobilen Vorrichtung (4) und einem anfänglichen Zugangspunkt (21, 22, 23) der mehreren Zugangspunkte (2) über die drahtlose Netzwerkschnittstelle der mobilen Vorrichtung (4) zu empfangen; und
eine Einheit zur Übertragung der Kennung der mobilen Vorrichtung, die eingerichtet ist, die Kennung der mobilen Vorrichtung (4) an jeden der mehreren Zugangspunkte (2) zu übertragen, nachdem der anfängliche Zugangspunkt (21, 22, 23) die Kennung der mobilen Vorrichtung (4) übertragen hat, und die Aufzeichnung der Kennung der mobilen Vorrichtung (4) in jeder schwarzen Liste (211, 221, 231) der mehreren Zugangspunkte (2) zu initiieren,
wobei die drahtlose Netzwerkschnittstelle der mobilen Vorrichtung (4) und die Zugangspunkte (2) eingerichtet sind, beruhend auf IEEE 802.11 zu kommunizieren.

10. Steuerentität (1) nach Anspruch 9, die aufweist
eine Einheit zur Herstellung einer Datensammlung erreichbarer Zugangspunkte, die eingerichtet ist, eine Datensammlung über erreichbare Zugangspunkte (21, 22, 23) der mobilen Vorrichtung (4) herzustellen, nachdem Informationen über eine Zurückweisung, die die Kennung der mobilen Vorrichtung (4) aufweisen, jedes Zugangspunkts (21, 22, 23) der mehreren Zugangspunkte (2), der durch die drahtlose Netzwerkschnittstelle der mobilen Vorrichtung (4) erreichbar ist, an die Steuerentität übertragen worden sind.

11. Steuerentität (1) nach einem der Ansprüche 9 oder 10, wobei die Einheit zur Anpassung der schwarzen Liste eingerichtet ist, die schwarze Liste (211, 221, 231) von jedem der Zugangspunkte (2) durch Entfernen der Kennung der mobilen Vorrichtung (4) aus der schwarzen Liste (211, 221, 231) eines ausgewählten Zugangspunkts (21, 22, 23) der mehreren Zugangspunkte (2) anzupassen, wobei der ausgewählte Zugangspunkt (21, 22, 23) gemäß einem vordefinierten Mechanismus bewertet wird.

12. Steuerentität (1) nach Anspruch 11, wobei die Einheit zur Anpassung der schwarzen Liste eingerichtet ist, die schwarze Liste (211, 221, 231) von jedem der Zugangspunkte durch Aufzeichnen der Kennung der mobilen Vorrichtung (4) in der schwarzen Liste (211, 221, 231) des ausgewählten Zugangspunkts (21, 22, 23) und Entfernen der Kennung aus der schwarzen Liste (211, 221, 231) für einen weiteren ausgewählten Zugangspunkt (21, 22, 23) der mehreren Zugangspunkte (2) anzupassen, wobei der weitere ausgewählte Zugangspunkt (21, 22, 23) gemäß dem vordefinierten Mechanismus bewertet wird.

13. Steuerentität (1) nach einem der Ansprüche 9 bis 12, wobei die Datenbank der Steuerentität (1) eingerichtet ist, mindestens teilweise die Zurückweisungsinformationen zu speichern.

## Revendications

1. Procédé de découverte de points d'accès entourant un dispositif mobile classique (4) à l'intérieur d'un réseau, le dispositif mobile (4) présentant une interface de réseau sans fil, le réseau comprenant une pluralité de points d'accès sans fil (2) et une liste noire (211, 221, 231) étant implémentée pour chacun des points de la pluralité de points d'accès (2), ledit procédé comprenant :
la fourniture d'une entité de commande (1) connectée à chacun des points de la pluralité de points d'accès (2) ;
l'établissement d'une connexion entre le dispositif mobile (4) et un point d'accès initial (21, 22, 23) des points d'accès (2) via l'interface de réseau sans fil du dispositif mobile (4) ;
la transmission par le point d'accès initial (21, 22, 23) d'un identifiant du dispositif mobile (4) à l'entité de commande (1) ;
la transmission par l'entité de commande (1) d'un message d'ajout à liste noire à chacun des points de la pluralité de points d'accès (2), le message d'ajout à liste noire comprenant l'identifiant du dispositif mobile (4) et une instruction d'ajouter l'identifiant du dispositif mobile (4) à la liste noire respective (211, 221, 231) de chacun des points de la pluralité de points d'accès (2) ;
l'envoi par le point d'accès initial (21, 22, 23) d'un message de dissociation au dispositif mobile (4) pour supprimer l'association avec le dispositif mobile (4) ;
la transmission par le dispositif mobile (4) d'une demande d'accès à un autre point d'accès (21, 22, 23) de la pluralité de points d'accès (2), la demande comprenant l'identifiant du dispositif mobile (4) ;
le rejet par l'autre point d'accès (21, 22, 23) de la demande du dispositif mobile (4) et la transmission d'informations sur le rejet à l'entité de commande (1), les informations de rejet comprenant l'identifiant du dispositif mobile (4) et un identifiant de l'autre point d'accès (21, 22, 23) ;
la répétition par le dispositif mobile de l'étape de transmission d'une demande à un autre point d'accès (21, 22, 23) jusqu'à l'envoi par le dispositif mobile (4) d'une demande d'accès à chacun des points de la pluralité de points d'accès (2) et/ou jusqu'à l'expiration d'un délai,
où l'interface de réseau sans fil du dispositif mobile (4) et les points d'accès (2) sont prévus pour communiquer conformément à IEEE 802.11.

2. Procédé selon la revendication 1, où
le dispositif mobile (4) transmet une demande d'accès comprenant l'identifiant du dispositif mobile (4) à chaque point d'accès (21, 22, 23) de la pluralité de points d'accès (2) pouvant être atteint par l'interface de réseau sans fil du dispositif mobile (4) ;
chaque point d'accès pouvant être atteint (21, 22, 23) rejette la demande du dispositif mobile (4) et transmet des informations sur le rejet comprenant l'identifiant du dispositif mobile (4) à l'entité de commande ; et
l'entité de commande (1) établit une collecte de données sur les points d'accès (2) du dispositif mobile (4) pouvant être atteints.

3. Procédé selon l'une des revendications précédentes, où l'adaptation de la liste noire (211, 221, 231) de chacun des points d'accès (2) comprend la suppression de l'identifiant du dispositif mobile (4) de la liste noire (211, 221, 231) d'un point d'accès sélectionné (21, 22, 23) de la pluralité de points d'accès (2), le point d'accès sélectionné (21, 22, 23) étant évalué en fonction d'un mécanisme défini.

4. Procédé selon la revendication 3, où l'adaptation de la liste noire (211, 221, 231) de chacun des points d'accès (2) comprend l'enregistrement de l'identifiant du dispositif mobile (4) dans la liste noire (211, 221, 231) du point d'accès sélectionné (21, 22, 23) et la suppression de l'identifiant de la liste noire (211, 221, 231) pour un nouveau point d'accès sélectionné (21, 22, 23) de la pluralité de points d'accès (2), le nouveau point d'accès sélectionné (21, 22, 23) étant évalué en fonction du mécanisme défini.

5. Procédé selon l'une des revendications précédentes, où une base de données (12) est prévue dans l'entité de commande (1) et où l'entité de commande (1) stocke au moins partiellement les informations de rejet dans la base de données (12).

6. Procédé selon l'une des revendications précédentes, où les informations de rejet comprennent en outre un identifiant dudit au moins un point d'accès, une intensité de signal du dispositif mobile (4) audit au moins un point d'accès, la fonctionnalité dudit au moins un point d'accès (21, 22, 23), les ressources disponibles audit au moins un point d'accès (21, 22, 23) ou une combinaison quelconque de ceux-ci.

7. Procédé selon l'une des revendications précédentes, où l'identifiant du dispositif mobile (4) est l'adresse de commande d'accès au support de l'interface de réseau sans fil du dispositif mobile (4).

8. Programme informatique pourvu de moyens de code programme exécutables par ordinateur, où les moyens de code sont prévus pour implémenter les étapes de procédé telles qu'appliquées par l'entité de commande (1) définie en revendications 1 à 7 sur un ordinateur lors de leur exécution.

9. Entité de commande (1) pourvue d'une unité de traitement, d'une interface réseau connectable à une pluralité de points d'accès (2) présentant chacun une liste noire respective à l'intérieur d'un réseau, une unité de mémoire et une base de données (12) prévues dans l'unité de mémoire, ladite entité de commande (1) étant prévue pour gérer un accès sans fil d'un dispositif mobile (4) pourvu d'une interface de réseau sans fil à l'intérieur du réseau, ladite entité de commande (1) comprenant
un enregistreur d'identifiant de dispositif mobile prévu pour enregistrer un identifiant du dispositif mobile (4) dans la liste noire (211, 221, 231) de chacun des points de la pluralité de points d'accès (2) ; et
un adaptateur de liste noire prévu pour adapter la liste noire (211, 221, 231) de chacun des points d'accès (2) au moyen d'informations de rejet transmises par au moins un point d'accès (21, 22, 23) de la pluralité de points d'accès (2), les informations de rejet comprenant l'identifiant du dispositif mobile (4),
l'enregistreur d'identifiant de dispositif mobile étant prévu pour enregistrer l'identifiant du dispositif mobile (4) dans chaque liste noire (211, 221, 231) de la pluralité de points d'accès (2) en comprenant
un instaurateur de connexion prévu pour recevoir des informations sur une connexion réussie entre le dispositif mobile (4) et un point d'accès initial (21, 22, 23) de la pluralité de points d'accès (2) via l'interface de réseau sans fil du dispositif mobile (4) ; et
un émetteur d'identifiant de dispositif mobile prévu pour transmettre l'identifiant du dispositif mobile (4) à chacun des points de la pluralité de points d'accès (2) après transmission par le point d'accès initial (21, 22, 23) de l'identifiant du dispositif mobile (4) et lancement de l'enregistrement de l'identifiant du dispositif mobile (4) dans chaque liste noire (211, 221, 231) de la pluralité de points d'accès (2),
l'interface de réseau sans fil du dispositif mobile (4) et les points d'accès (2) étant prévus pour communiquer conformément à IEEE 802.11.

10. Entité de commande (1) selon la revendication 9, comprenant
un instaurateur de collecte de données de points d'accès prévu pour établir une collecte de données sur des points d'accès (21, 22, 23) du dispositif mobile (4) pouvant être atteints, après transmission à l'entité de commande d'informations sur un rejet comprenant l'identifiant du dispositif mobile (4) de chaque point d'accès (21, 22, 23) de la pluralité de points d'accès (2) pouvant être atteint par l'interface de réseau sans fil du dispositif mobile (4).

11. Entité de commande (1) selon la revendication 9 ou la revendication 10, où l'adaptateur de liste noire est prévu pour adapter la liste noire (211, 221, 231) de chacun des points d'accès (2) par suppression de l'identifiant du dispositif mobile (4) de la liste noire (211, 221, 231) d'un point d'accès sélectionné (21, 22, 23) de la pluralité de points d'accès (2), le point d'accès sélectionné (21, 22, 23) étant évalué en fonction d'un mécanisme défini.

12. Entité de commande (1) selon la revendication 11, où l'adaptateur de liste noire est prévu pour adapter la liste noire (211, 221, 231) de chacun des points d'accès (2) par enregistrement de l'identifiant du dispositif mobile (4) dans la liste noire (211, 221, 231) du point d'accès sélectionné (21, 22, 23) et suppression de l'identifiant de la liste noire (211, 221, 231) pour un nouveau point d'accès sélectionné (21, 22, 23) de la pluralité de points d'accès (2), le nouveau point d'accès sélectionné (21, 22, 23) étant évalué en fonction du mécanisme défini.

13. Entité de commande (1) selon l'une des revendications 9 à 12, où la base de données de l'entité de commande (1) est prévue pour stocker au moins partiellement les informations de rejet.
